(19) Europäisches Patentamt
European Patent Office
Office européen des brevets

(11) EP 2 755 319 B1

(12) EUROPEAN PATENT SPECIFICATION

(45) Date of publication and mention of the grant of the patent:
16.09.2020 Bulletin 2020/38

(51) Int Cl.:
H02P 6/18 (2016.01)          H02P 21/00 (2016.01)
H02P 27/04 (2016.01)

(21) Application number: 12830805.3

(22) Date of filing: 22.05.2012

(86) International application number:
PCT/JP2012/063004

(87) International publication number:
WO 2013/035382 (14.03.2013 Gazette 2013/11)

(54) **CONTROL SYSTEM FOR SYNCHRONOUS MOTOR**

STEUERUNGSSYSTEM FÜR EINEN SYNCHRONMOTOR

SYSTÈME DE COMMANDE DE MOTEUR SYNCHRONE

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 08.09.2011 JP 2011195857

(43) Date of publication of application:
16.07.2014 Bulletin 2014/29

(73) Proprietor: Hitachi Industrial Equipment Systems Co., Ltd.
Tokyo 101-0022 (JP)

(72) Inventors:
• TAKAHATA Ryoichi
Tokyo 100-8280 (JP)

• IWAJI Yoshitaka
Tokyo 100-8280 (JP)
• AOYAGI Shigehisa
Tokyo 100-8280 (JP)
• TOBARI Kazuaki
Tokyo 100-8280 (JP)

(74) Representative: Mewburn Ellis LLP
Aurora Building
Counterslip
Bristol BS1 6BX (GB)

(56) References cited:
WO-A1-2005/099082        JP-A- 2004 048 886
JP-A- 2008 172 948        JP-A- 2009 189 176
US-A1- 2009 200 971       US-B1- 6 400 107

**Description**

Technical Field

The present invention relates to a drive system for a synchronous motor, and, in particular, to a control system for the synchronous motor which is suitable for controlling a rotational frequency and torque of the synchronous motor by estimating a magnetic pole position of a rotor without employing a position sensor.

Background Art

US6400107 discloses a motor control device capable of driving a synchronous motor with high efficiency and high reliability.

In technical fields such as a household appliance field, an industrial machinery field, and a vehicle field, a motor drive device is employed for rotational speed control, torque assist control, positioning control, etc. of a fan, a pump, a compressor, a conveyor, an elevator, for example.

In the motor drive device in these technical fields, a small-sized high-efficiency synchronous motor which employs a permanent magnet is broadly used. In order to drive the synchronous motor, information on a magnetic pole position of a rotor of the motor is necessary, therefore, a position sensor, such as a resolver and a Hall IC, which detects the magnetic pole position is necessary.

By the way, in recent years, there is increasing spread of the technology called the "sensorless control" which performs the revolving speed control and torque control of a synchronous motor without employing such a position sensor. Owing to practical utilization of the sensorless control, it has become possible to reduce costs necessary for installation of a position sensor (costs of a position sensor itself and costs of wiring of the position sensor), and it has also become possible to reduce the size of a device and to use the device in adverse environments, as much as the position sensor becomes unnecessary. These facts claim a large effect.

Currently, the sensorless control of a synchronous motor adopts, for example, a method which drives a synchronous motor with the use of position information of a rotor obtained by directly detecting the induced voltage (velocity-induced electromotive force) generated by the rotation of the rotor, and a position estimation method which estimates and calculates the rotor position on the basis of a mathematical model of the target motor.

As described above, the sensorless control has such a large effect that it is possible to reduce the cost necessary for installation of a position sensor, and it is also possible to reduce the size of a device and to use the device in adverse environments, as much as the position sensor becomes unnecessary. However, such sensorless control also has a serious problem in the position detection method in low velocity driving.

Specifically, the most part of the sensorless control in currently practical use are based on an induced voltage (velocity-induced electromotive force) generated by a synchronous motor; therefore, there occurs the problem that in the region near the zero velocity (substantial halt state) and low velocity where the induced voltage is small, the detection sensitivity of the induced voltage deteriorates and the position information is buried in a noise.

To cope with such a problem, a sensorless control method in a low velocity region on the basis of a 120-degree energization control of a synchronous motor is proposed, as disclosed by Japanese Patent Laid open No. 2009-189176 (Patent Literature 1). Accordingly, it is now possible to control a synchronous motor in the low velocity region where a velocity-induced voltage is small, by estimating the phase and velocity of a rotor on the basis of the electromotive force of a non-energized phase (open phase).

Japanese Patent Laid open No. 2004-048886 (Patent Literature 2) discloses technology in which a first control system (a constant V/F control system) for controlling the relation of voltage (V) and frequency (F) applied to a synchronous motor to be constant is adopted in a low velocity region, and a second control system (a voltage vector control system) for controlling the amplitude and phase of a drive voltage of the synchronous motor is adopted in a middle and high velocity region, and in which both drive control systems are switched corresponding to the velocity of the synchronous motor, thereby the high-torque and high-efficiency control characteristic is accomplished in a broad velocity region from a halt state to a high velocity region.

Furthermore, Japanese Patent Laid open No. 2003-111469 (Patent Literature 3) discloses an example of configuration in which the drive systems are switched. In Patent Literature 3, when switching an intermittent energization drive (120-degree energization drive) and a 180-degree energization drive, in order to suppress the rotation frequency fluctuation of a synchronous motor, the driving signal at the time of switching in one drive system is compensated and used as a driving signal in the other drive system, thereby, stabilization of control is attained.

Citation List

Patent Literature

Patent Literature 1:Japanese Patent Laid open No. 2009-189176
Patent Literature 2: Japanese Patent Laid open No. 2004-048886
Patent Literature 3: Japanese Patent Laid open No. 2003-111469

Summary of Invention

Technical Problem

According to the related art technology, for example according to the invention of Patent Literature 1, it is possible for a synchronous motor to offer favorable controlling performance in a zero or low velocity region. However, in a broad velocity range covering up to a middle and high velocity region, a velocity-induced voltage becomes large, accordingly, an error occurs in a threshold of an electromotive force of a non-energized phase (open phase), distorting a current waveform and deteriorating the power factor. As a result, there arises a problem that it is difficult to perform a high-torque and high-efficiency control of the synchronous motor.

On the other hand, according to the invention of Patent Literature 2, it is possible to obtain favorable controlling performance in a broad velocity range covering up to a middle and high velocity region. However, in the low velocity region where the constant V/F control according to the related art technology is employed, there is a problem that a torque characteristic deteriorates with easy loss of synchronism and that it is difficult to perform a smooth switching to a middle and high velocity system with reduced torque shock, or to perform the so-called seamless drive.

According to the invention of Patent Literature 3, it is possible to suppress rotation frequency fluctuation by compensating a driving signal at the time of switching the drive system. However, in this case, the current phase is not taken into consideration, accordingly, there arises a problem that the current waveform is distorted and a pulsating torque increases before and after the switching. Moreover, there is no description about the position sensorless control in a zero and low velocity region and the measure of drive switching.

The purpose of the present invention lies in providing a control system for a synchronous motor which can perform estimation of phase and velocity with a high degree of accuracy, in a broad velocity range from a zero or low velocity region to a middle and high velocity region, and which can realize the high-efficiency control characteristic by performing a seamless drive with reduced torque shock.

Solution to Problem

The present invention provides a control system as set forth in Claim 1.

The feature of the present invention is a control system for a synchronous motor in which the synchronous motor is activated by a 120-degree energization method and is subsequently driven by a 180-degree energization method switched when the rotational velocity increases to exceed a prescribed value, and in which a power factor improvement means for improving a power factor in the 120-degree energization is provided in switching from the 120-degree energization method to the 180-degree energization method, and the synchronous motor is driven by the 180-degree energization method after switching from the 120-degree energization method with the improved power factor.

Advantageous Effects of Invention

According to the present invention, it is possible to provide a control system for a synchronous motor which can perform a seamless drive with reduced torque shock in a broad velocity range from a zero velocity (halt state) to a middle and high velocity region, and which can achieve a high-efficiency control characteristic.

Brief Description of Drawings

Figure 1 is a block diagram illustrating a drive system for a synchronous motor according to one example of the present invention.
Figure 2 is a schematic diagram when a pulse voltage is applied to two phases of the synchronous motor.

Figure 3 is a characteristic diagram illustrating an induced voltage appearing in a non-energized phase (open phase) when the pulse voltage as illustrated in Figure 2 is applied.

Figure 4 is a characteristic diagram of an induced voltage appearing in an open phase corresponding to an energization mode.

Figure 5 is a characteristic diagram illustrating a relation between a non-energized phase (open phase) voltage and a reference voltage (threshold) corresponding to an energization mode.

Figure 6 is a diagram illustrating a configuration of a reference level switch illustrated in Figure 1.

Figure 7 is an energization mode chart illustrating an energization mode of a phase quantizer illustrated in Figure 1.

Figure 8 is a waveform chart illustrating a waveform of a phase current flowing in the synchronous motor illustrated in Figure 1.

Figure 9 is a block diagram illustrating a configuration of a phase/velocity estimation arithmetic unit as a principal part of a drive system for a synchronous motor according to another example of the present invention.

Figure 10 is a block diagram illustrating a configuration of a phase/velocity estimation arithmetic unit as a principal part of a drive system for a synchronous motor according to yet another example of the present invention.

Figure 11 is a block diagram illustrating a configuration of the drive system for the synchronous motor according to the yet another example of the present invention.

Figure 12 is an explanatory diagram illustrating regions of combination of the energization method and the phase estimation method, as a function of the rotational velocity of the synchronous motor, in the drive system for the synchronous motor according to the present invention.

Description of Embodiments

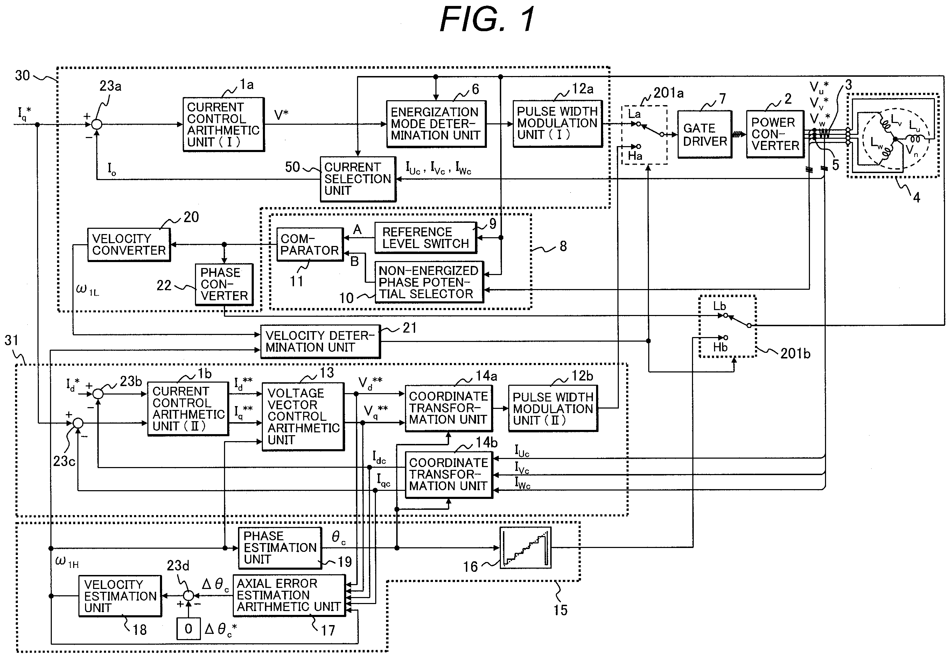

Hereinafter, the examples of the present invention are explained in detail, with reference to FIG. 1 to FIG. 11. A symbol which is common in each drawing indicates the same element or an element which has an equal function.

In the following, a synchronous motor as a control target is described about a synchronous motor which employs a permanent magnet for a rotor. However, the technical idea of the present invention can be applied to other synchronous motors (for example, a synchronous motor which employs a field winding for a rotor, or a motor driven by reluctance torque), and the almost same effect is obtained.

Example 1

FIG. 1 is a block diagram illustrating a configuration of a drive system for a synchronous motor according to Example 1 of the present invention. As illustrated in FIG. 1, the drive system for the synchronous motor according to Example 1 comprises the synchronous motor 4 as a control target, a power converter (the so-called inverter device) 2 which is coupled to the synchronous motor 4 and configured with plural switching elements, and a controller including plural functional sections which output a voltage command to the power converter 2, thereby controlling the synchronous motor 4.

The controller is configured with two estimation means, a switching means (201b) which switches the two estimation means, two driving means, and a switching means (201a) which switches the two driving means. The two estimation means are: a means which selects two phases to be energized among three phase windings of the synchronous motor 4, applies a pulse voltage, and estimates phase (magnetic pole position of a rotor) and velocity, on the basis of an electromotive force of a non-energized phase (actually, it is an open phase, however, it may be called non-energized phase in the following as a whole) at the time of the pulse application (a mode switching trigger generator 8, a velocity conversion unit 20); and a means which estimates phase and velocity on the basis of a velocity-induced electromotive force of the synchronous motor (a phase/velocity estimation arithmetic unit 15). The two driving means are: a driving means which drives the synchronous motor by 120-degree energization (a controller 30 serving as a 120-degree energization method section); and a driving means which drives the synchronous motor by 180-degree energization (a controller 31 serving as a 180-degree energization method section).

First, a configuration of a zero and low velocity region control device and a control method in a zero and low velocity region are explained.

The zero and low velocity region control device is configured with a current control arithmetic unit (I) 1a which outputs a voltage application command V* to the synchronous motor 4, a pulse width modulation unit (I) 12a which calculates an applied voltage to be supplied to the synchronous motor 4 and generates a pulse width modulation wave (PWM) signal to be supplied to the power converter 2, the power converter 2 which generates an AC voltage via a gate driver 7 in response to the signal of the pulse width modulation unit (I) 12a, and the synchronous motor 4 which is controlled by these units.

The current control arithmetic unit (I) 1a outputs the voltage application command V* to the synchronous motor 4, based on a current command value calculated by an adder 23a using a first q-axis current command value Iq* supplied from an antecedent control device (not shown) and a q-axis current detection value Iqc.

The pulse width modulation unit (I) 12a creates a pulse width modulated 120-degree energization wave, on the basis of the voltage command V*. An energization mode determination unit 6 outputs sequentially a command which determines six kinds of switching modes of a main circuit part configuring the power converter 2.

A gate driver 7 drives directly each switching element of the main circuit part of the power converter 2 and applies a voltage corresponding to the voltage command V* to the synchronous motor 4.

The energization mode determination unit 6 switches the energization mode according to a signal generated by a switch 201b. The switch 201b serves also as a switch for selecting the mode signal of a 120-degree energization method. At the time of a low velocity, the switch 201b is switched to the Lb side to switch the mode, on the basis of a signal of the mode switching trigger generator 8. When the velocity becomes exceeding a prescribed velocity, the switch 201b is switched to the Hb side to switch the mode, on the basis of a signal of the phase/velocity estimation arithmetic unit 15.

The mode switching trigger generator 8 is configured with a reference level switch 9, a comparator 11 which generates a threshold used as a reference of a non-energized phase electromotive force of the synchronous motor 4, and a non-energized phase potential selection unit 10 which selects a non-energized phase from the terminal voltage of the synchronous motor 4 on the basis of the mode command.

An output of the comparator 11 is converted into a velocity $\omega_{1L}$ by means of the velocity conversion unit 20, and compared by a velocity determination unit 21 with a switching velocity V1 and a switching velocity V2 to be described later. When the velocity is not greater than the switching velocity V2, the synchronous motor is driven with the use of the controller 30 and adopting the phase and velocity estimation method based on a non-energized phase electromotive force obtained by a phase converter 22. That is, the switches 201a and 201b are switched to the low velocity side La and Lb, respectively.

The controller 30, that is, the 120-degree energization method, selects two phases from the three phase windings of the synchronous motor 4 and applies voltage to generate torque. Six kinds of combination of the two phases exist, and they are defined as an energization mode 1 to an energization mode 6. Here, three windings are defined respectively as U phase, V phase, and W phase, as is commonly known.

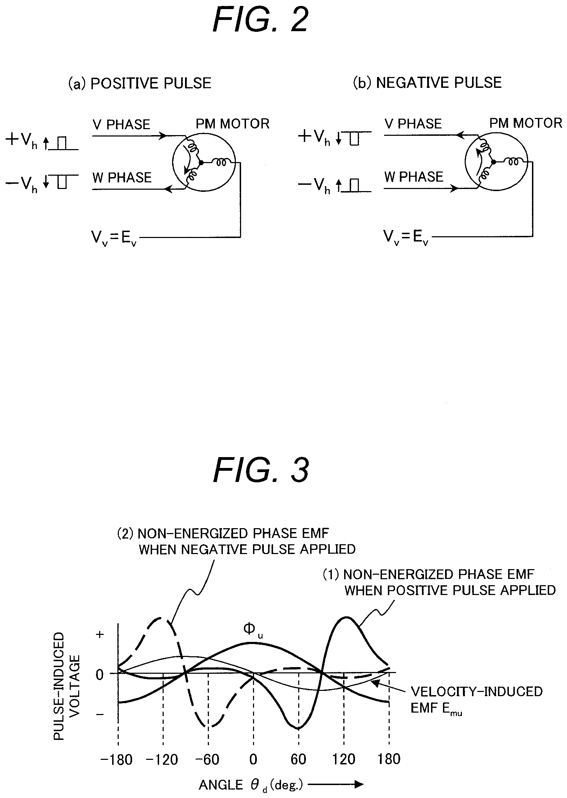

FIG. 2 (a) illustrates a mode in the state where energization is performed from V phase to W phase (it corresponds to the energization mode 3 as will be described later), and FIG. 2 (b) illustrates an energization mode in the state where energization is performed from W phase to V phase on the contrary.

In comparison with these energized phases, an electromotive force which appears in U phase as a non-energized phase becomes as shown in FIG. 3, when the position angle of a rotor is changed by one electrical angle period. It is seen how the electromotive force of U phase changes with the position of the rotor.

This electromotive force is not a velocity-induced voltage but the difference in the rate of change of the magnetic flux generated in V phase and W phase, observed as voltage in U phase which is the non-energized phase. Therefore, it is distinguished from the velocity-induced voltage.

It is seen that the electromotive force of the non-energized phase for the positive pulse indicated by a solid line in FIG. 3 and the electromotive force of the non-energized phase for the negative pulse indicated by a dashed line, both at a low velocity, are larger than the velocity-induced voltage Emu.

Therefore, when the present electromotive force of the non-energized phase is detected instead of the velocity-induced voltage, a comparatively large position signal of the rotor is obtained, when the synchronous motor 4 rotates in a region from near zero velocity to a low velocity.

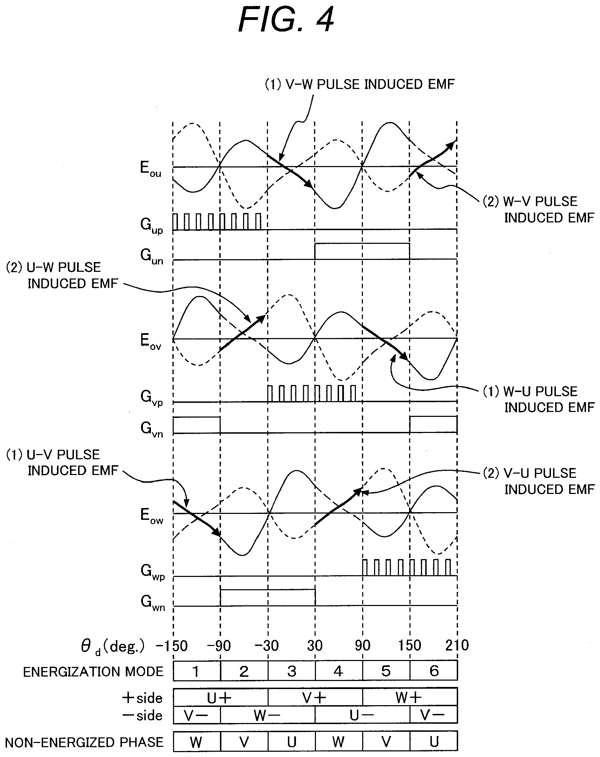

FIG. 4 illustrates an electromotive force of a non-energized phase of U phase, V phase, and W phase, a gate signal of a switching element configuring the power converter 2, a rotation phase angle θd of the synchronous motor 4, and the energization mode.

The voltage pulse illustrated in FIG. 2 (A) and FIG. 2 (B) described above is applied during the normal operation of the 120-degree energization, and two energized phases are switched every 60 degrees, corresponding to the phase angle θd. That is, a non-energized phase is also switched sequentially.

In FIG. 4, the energization mode 3 and the energization mode 6 are equivalent to the state of FIG. 2(A) and FIG. 2 (B), respectively. At this time, U phase is a non-energized phase and the electromotive force as the non-energized phase appears like a thick arrow. That is, the electromotive force which decreases to the negative direction in the energization mode 3 and increases to the positive direction in the energization mode 6 is observed.

Since the non-energized phase is sequentially switched as a matter of course, when V phase is a non-energized phase, an electromotive force of the non-energized phase appears like a thick arrow in the energization mode 2 and the energization mode 5, and the electromotive force which increases to the positive direction in the energization mode 2 and decreases to the negative direction in the energization mode 5 is observed.

Similarly, when W phase is a non-energized phase, an electromotive force of the non-energized phase appears like a thick arrow in the energization mode 1 and the energization mode 4, and the electromotive force which decreases to the negative direction in the energization mode 1 and increases to the positive direction in the energization mode 4 is observed.

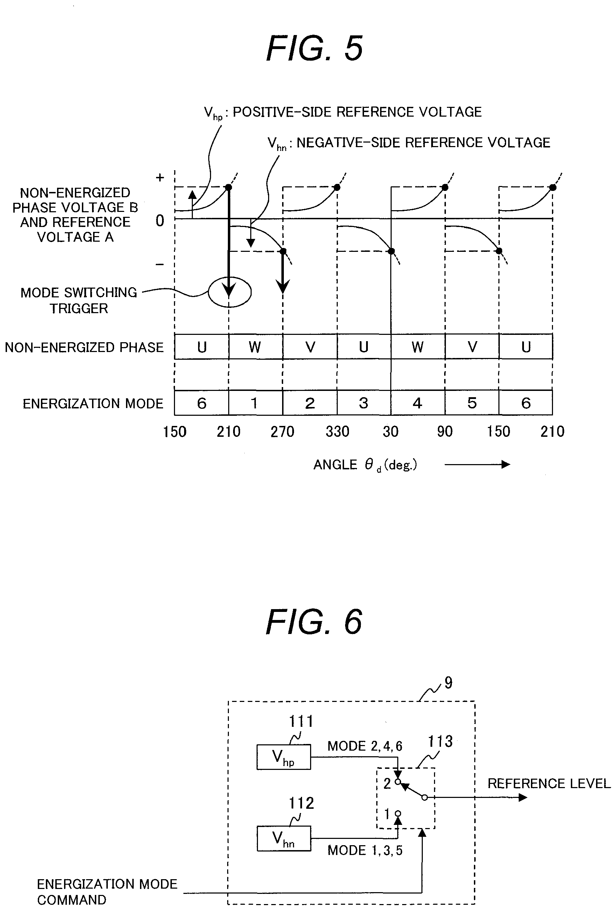

FIG. 5 illustrates the relation of an energization mode, a non-energized phase, and an electromotive force of the non-energized phase. It is seen that the electromotive force of the non-energized phase repeats a rise in the positive side and a fall in the negative side, whenever the energization mode changes. Accordingly, when a reference voltage (Vhp, Vhn) serving as a threshold is set in the positive side and the negative side respectively, it is possible to estimate a phase from the magnitude relation between the reference voltage and the electromotive force of the non-energized phase. This enables the generation of a trigger signal for the energization mode switching.

That is, the reference voltage is regarded as a value indicating the prescribed phase at which the energization mode is switched. When the electromotive force of the non-energized phase actually exceeds the reference voltage, a mode switching trigger signal is generated at that point and the energization mode is switched. Therefore, although this reference voltage is determined tentatively, it has a sufficient ability to estimate a phase in a zero or low velocity state.

These operations are achieved by the mode switching trigger generator 8, and the non-energized phase potential selector 10 selects a non-energized phase corresponding to an energization mode and detects an electromotive force of the non-energized phase. In the reference level switch 9, illustrated in FIG. 6, which generates the reference voltage used as a threshold in the positive rotation direction, the positive reference voltage Vhp and the negative reference voltage Vhn are generated. That is, by means of a switch 113, the positive reference voltage Vhp is generated in the energization modes 2, 4, and 6, and the negative reference voltage Vhn is generated in the energization modes 1, 3, and 5.

Then, the electromotive force of the previously described non-energized phase and the positive reference voltage Vhp and the negative reference voltage Vhn as the threshold values are inputted to the comparator 11 to make a comparison. When the electromotive force of the non-energized phase reaches the threshold, a mode switching trigger signal is generated and an energization mode is advanced to the positive rotation direction. What is described above is fundamental operation for generating torque in the vicinity of zero velocity.

FIG. 6 illustrates a configuration of the reference level switch 9 for generating the reference voltage used as the reference of the electromotive force of the non-energized phase of the synchronous motor 4. The reference level switch 9 is configured with functional components of a positive reference voltage setting device 111, a negative reference voltage setting device 112, and a switch 113. When the energization mode command is one of the energization modes 1, 3, and 5, the switch 113 is set to the side of state 1, and the reference voltage serving as the threshold is set as Vhn. When the energization mode command is one of the energization modes 2, 4, and 6, the switch 113 is set to the side of state 2, and the reference voltage is set as Vhp.

The comparator 11 compares the magnitude of the positive reference voltage Vhp and negative reference voltage Vhn with the magnitude of the electromotive force of the non-energized phase, to generate a trigger signal of the energization mode switching. Accordingly, a suitable motor driving torque is obtained corresponding to the rotational position of the rotor. The induced voltage of the non-energized phase is not a velocity-induced electromotive force, but an electromotive force (transformer electromotive force) generated by the change of magnetic flux. Therefore, it is possible to detect the induced voltage with sufficient sensitivity even in the state of a zero velocity (at halt) or at an extremely low velocity.

As described above, when the electromotive force of the non-energized phase is detected, it is possible to detect the rotor position in the state of a zero velocity or at an extremely low velocity, with a sufficient accuracy. It is also possible to calculate the rotational velocity on the basis of the detection of the electromotive force of the non-energized phase.

However, when the rotational velocity becomes high, the velocity-induced electromotive force becomes more dominant than the electromotive force of the non-energized phase, and the sensitivity deteriorates in a middle and high velocity region where the influence of the velocity-induced electromotive force is large, causing deterioration of the detection accuracy. Accordingly, it is necessary to switch the drive method in a middle and high velocity region.

Next, a configuration of a middle and high velocity region control device in a middle and high velocity region and a control method are explained. As technology which does not employ a position sensor, there is a method for performing vector control, as disclosed by Japanese Patent Laid open No. 2006-20411.

The middle and high velocity region control device is configured with a current control arithmetic unit (II) 1b which performs vector control of the synchronous motor 4, a voltage vector control arithmetic unit 13, a coordinate transformation unit 14a which performs coordinate transformation on the basis of a signal from the voltage vector control arithmetic unit 13 and a phase estimate $\theta$c from a phase estimation unit 19, a pulse width modulation unit (II) 12b which generates a PWM signal to be supplied to the power converter 2, the power converter 2 which generates an AC voltage via the gate driver 7 in response to the signal of the pulse width modulation unit (II) 12b, a current detector 3 which detects three-phase alternating currents Iu, Iv, and Iw flowing through the synchronous motor 4, and the synchronous motor 4 controlled by these units.

A coordinate transformation unit 14b outputs d-axis and q-axis current detection values Idc and Iqc on the basis of detection values Iuc, Ivc, and Iwc of the three-phase alternating current Iu, Iv, and Iw, and a phase estimate $\theta$c from the phase estimation unit 19.

On the basis of second voltage command values Vd**and Vq** of the d axis and the q axis, a velocity estimate $\omega_{1H}$, the d-axis and q-axis current detection values Idc and Iqc, and an electric constant of the synchronous motor, an axial error estimation arithmetic unit 17 performs estimation arithmetic of the axial error as a deviation of the phase estimate θc and the d-axis phase θd of the synchronous motor through the use of the following expression (Equation 1), and outputs an estimate Δθc.

[Equation 1]

$$\Delta \theta_c = \tan^{-1}\left( \frac{V_d^{**} - R_1^* \cdot I_{dc} + \omega_{1H} \cdot L_q^* \cdot I_{qc}}{V_q^{**} - R_1^* \cdot I_{qc} - \omega_{1H} \cdot L_q^* \cdot I_{dc}} \right) \quad \cdots (1)$$

Here, R1* is a winding resistance value per phase, Lq* is a q-axis inductance value, where the symbol (*) means a setting value. Then, an adder 23d calculates the deviation of the estimate Δθ of the axial error from a command value Δθc* of the axial error which is "zero." On the basis of the calculated deviation, a velocity estimation unit 18 outputs a velocity estimate $\omega_{1H}$.

The phase estimation unit 19 integrates the velocity estimate $\omega_{1H}$, and outputs the phase estimate θc to the coordinate transformation units 14a and 14b.

The current control arithmetic unit (II) adds, by adders 23b and 23c, the first current command values Id* and Iq* of the d axis and the q axis supplied from an antecedent control device (not shown), and the d-axis and the q-axis current detection values Idc and Iqc, respectively, and outputs second current command values Id** and Iq** of the d axis and the q axis.

The voltage vector arithmetic unit 13 outputs second voltage command values Vd** and Vq** of the d axis and the q axis, expressed by the following determinants (Equation 2), on the basis of the electric constant of synchronous motor 4, the second current command values Id** and Iq** of the d axis and the q axis, and the velocity estimate $\omega_{1H}$.

[Equation 2]

$$\begin{bmatrix} V_d^{**} \\ V_q^{**} \end{bmatrix} = \begin{bmatrix} R_1^* & -\omega_{1H} \cdot L_q^* \\ \omega_{1H} \cdot L_d^* & R_1^* \end{bmatrix} \cdot \begin{bmatrix} I_d^{**} \\ I_q^{**} \end{bmatrix} + \begin{bmatrix} 0 \\ \omega_{1H} \cdot K_e^* \end{bmatrix} \quad \cdots (2)$$

Here, $L_d^*$ is a d-axis inductance value and $K_e^*$ is an induced voltage constant. Then, the coordinate transformation unit 14a outputs voltage command values VU*, VV*, and VW* of the three-phase alternating current from the voltage command values Vd** and Vq**, and the phase estimate θc.

The controller 31, that is, the 180-degree energization method, applies voltage to all the three phase windings of the synchronous motor so that torque may be generated.

Here, the velocity determination unit 21 determines whether the velocity estimate $\omega_{1H}$ is equal to the switching velocities V1 or V2. When the velocity is larger than V1, the synchronous motor is driven by use of the controller 31, adopting the phase and velocity estimation method based on the velocity-induced electromotive force. That is, the switches 201a and 201b are switched to the middle and high velocity side Ha and Hb. Described above are the configuration of the middle and high velocity region control device and the control method.

As described above, in an extremely low velocity region, the energization method adopts the 120-degree energization method and the phase and velocity of a rotor is estimated based on the electromotive force of a non-energized phase, and in a middle and high velocity region, the energization method adopts the 180-degree energization method and the phase and velocity of a rotor is estimated based on the velocity-induced electromotive force. The power converter 2 is controlled in this way; therefore, it has become possible to drive the synchronous motor 4 with a high degree of accuracy.

However, it has been found that a torque chock is accompanied when the energization method is switched from the 120-degree energization method to the 180-degree energization method, on the basis of the rotational velocity of the synchronous motor 4 as described above.

The reason lies in the fact that the energization mode switching signal (phase) is estimated from the magnitude relation of the electromotive force of the non-energized phase obtained by use of the 120-degree energization method and the positive (negative) reference voltage.

As described above, the positive (negative) reference voltage is regarded as a value indicating the prescribed phase at which the energization mode is switched. When the actual electromotive force of the non-energized phase exceeds this reference voltage, an energization mode switching trigger signal is generated at the point and the energization mode is switched. However, this reference voltage is determined in advance.

Therefore, when the rotational velocity is low, the velocity-induced voltage is low compared with the electromotive force of the non-energized phase; accordingly, the generation timing of the energization mode switching signal is not influenced so much even if both are added. However, when the velocity-induced voltage becomes large as the rotational velocity increases, the added voltage will become larger than the positive (negative) reference voltage earlier by the increased amount of the velocity-induced voltage.

Therefore, the energization mode switching signal is generated earlier than the normal phase; accordingly, the phase of electric current advances and the power factor tends to deteriorate as a result, and a torque chock is accompanied when the energization method is switched from the 120-degree energization method to the 180-degree energization method.

Accordingly, the present invention proposes the switching control under which the torque shock is not accompanied or suppressed, when switching the energization method from the 120-degree energization method to the 180-degree energization method.

The following explains, as the feature of the present invention, a torque shock reduced seamless drive method in which the torque shock is not accompanied or suppressed.

One of the features of the present invention is that, basically, the synchronous motor 4 is activated by a 120-degree energization method in a low velocity region and subsequently driven by a 180-degree energization method switched when the rotational velocity increases, and that when switching from the 120-degree energization method to the 180-degree energization method, the energization method is switched by use of a power factor improvement means for improving a power factor in the 120-degree energization.

Specifically, when a velocity $\omega_{1L}$ or $\omega_{1H}$ determined by the velocity determination unit 21 is larger than a first switching velocity V1, the 180-degree energization method is adopted using a phase estimate $\theta c$ obtained by the phase estimation unit 19 on the basis of a velocity-induced electromotive force. When the velocity $\omega_{1L}$ or $\omega_{1H}$ determined by the velocity determination unit 21 is smaller than the first switching velocity V1, the 120-degree energization method is basically adopted using the mode switching signal outputted by the mode switching trigger generator 8 on the basis of an electromotive force of a non-energized phase.

Between the first switching velocity V1 and the second switching velocity V2 smaller than the first switching velocity V1, the energization mode is determined on the basis of the phase estimate $\theta c$ outputted by the phase estimation unit 19, without using the mode switching signal outputted by the mode switching trigger generator 8.

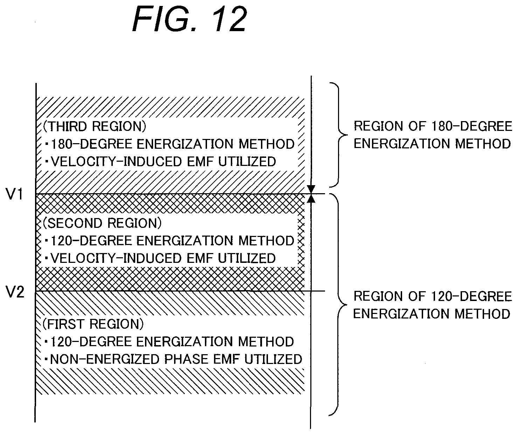

FIG. 12 illustrates the present control method schematically. That is, the rotational velocity region of the synchronous motor is divided at least into a first region, a second region, and a third region, and the relation of boundary rotational velocities V1 and V2 for the respective regions is set as V2 < V1 so as to satisfy the relation of the first region < the second region < the third region.

In FIG. 12, in the third region not less than the switching velocity V1, the 180-degree energization method is adopted and the phase employs a phase estimate $\theta c$ obtained by the phase estimation unit 19 on the basis of the velocity-induced electromotive force. In the second region and the first region which are not greater than the switching velocity V1, the 120-degree energization method is adopted and one of two phase estimates is selected for use.

That is, in the first region not greater than the switching velocity V2, the mode switching signal generated by the mode switching trigger generator 8 on the basis of the electromotive force of a non-energized phase is employed. On the contrary, in the second region between the switching velocity V1 and the switching velocity V2, the phase estimate $\theta c$ obtained by the phase estimation unit 19 on the basis of the velocity-induced electromotive force is employed.

In this way, what is new is that the phase estimate $\theta c$ based on the velocity-induced electromotive force employed for the 180-degree energization method is employed for the mode switching signal of the 120-degree energization method.

Here, the width of the second region (a rotational velocity range between V1 and V2) is set smaller than the width of the first region (a rotational velocity range between a zero or extremely low velocity and V2) and the width of the third region (a rotational velocity range between V1 and a maximum rotational velocity).

Now back to FIG. 1, when the velocity $\omega_{1L}$ or $\omega_{1H}$ determined by the velocity determination unit 21 is smaller than the second switching velocity V2, the switch 201a is switched to the low velocity position La, and the switch 201b is switched to the low velocity position Lb. Therefore, the operation at this time is the zero and low velocity region control explained previously. In this case, the region corresponds to the first region.

On the other hand, when the velocity $\omega_{1L}$ or $\omega_{1H}$ determined by the velocity determination unit 21 is larger than the first switching velocity V1, the switch 201a is switched to the high velocity position Ha, and the switch 201b is switched to the high velocity position Hb. Therefore, the operation at this time is the middle and high velocity region control explained previously. In this case, the region corresponds to the third region.

Furthermore, when the velocity $\omega_{1L}$ or $\omega_{1H}$ determined by the velocity determination unit 21 is smaller than the first switching velocity V1 and larger than the second switching velocity V2, the switch 201a is switched to the low velocity position La, and the switch 201b is switched to the high velocity position Hb. In this case, the region corresponds to the second region.

At this time, the velocity-induced electromotive force is increased to such a degree that a precise phase can be derived compared with the case of employing the electromotive force of the non-energized phase; therefore, the phase estimate θc estimated by the phase estimation unit 19 can acquire a continuous value with considerable precision.

It is necessary here to convert the phase estimate θc so that it can be applied to the 120-degree energization method. The phase quantizer 16 performs the conversion of the phase estimate θc of the phase estimation unit 19.

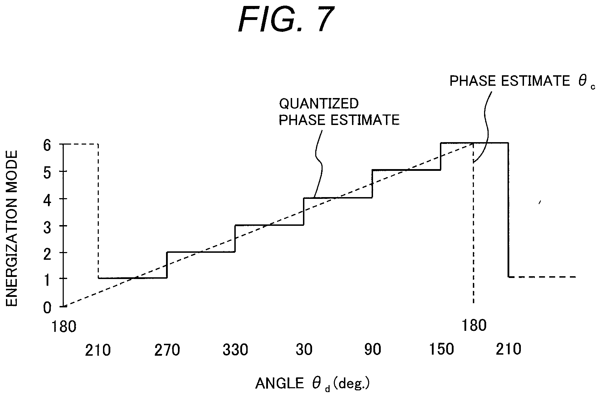

As illustrated in FIG. 7, the phase quantizer 1 quantizes a continuous phase estimate θc obtained by the phase estimation unit 19 every 60 degrees, and determines the phase step-wise. The energization mode is selected according to this phase. In the quantization, what is necessary is just to employ a central value in each 60 degrees of the continuous phase estimate θc, for example, as the energization mode switching trigger signal. However, this may also be decided arbitrarily so as to choose the optimal phase for the system.

In this way, the phase quantizer 16 converts the phase estimate θc into a value updated every 60 degrees, and with the use of the signal generated by the phase quantizer 16, the energization mode determination unit 6 switches six energization modes per one cycle (360 degrees).

Owing to this scheme, it can be expected to solve the above-described problem that when the velocity-induced voltage becomes large as the rotational velocity increases, the added voltage becomes larger than the positive (negative) reference voltage earlier by the increased amount of the velocity-induced voltage, and accordingly, the phase of electric current advances to deteriorate the power factor.

That is, when switching from the 120-degree energization method to the 180-degree energization method at the switching velocity V1, in the method which switches the energization mode on the basis of the electromotive force of a non-energized phase, as being employed in the 120-degree energization method, the phase of electric current advances in the neighborhood of and lower than the switching velocity V1 by the increased amount of the velocity-induced electromotive force. On the contrary, in the present example, the phase estimate θc obtained by the phase estimation unit 19 based on the velocity-induced electromotive force is employed between the switching velocity V1 and the switching velocity V2. Therefore, compared with the method which switches the energization mode on the basis of the electromotive force of the non-energized phase, it is possible to estimate a precise phase and to suppress the advancement of the current phase, leading to the improvement of the power factor. As a result, it becomes possible to accomplish a torque shock reduced seamless drive.

It is desirable to set the switching velocity V1, serving as the threshold for switching the 120-degree energization method and the 180-degree energization method in driving the synchronous motor, to about 10% of the rated rotation frequency or the maximum rotation frequency of the synchronous motor.

The switching velocity V2, serving as the threshold for switching the phase estimation method, is lower than the switching velocity V1 and chosen as an optimal value in accordance with the system to be adopted or the property of a detection sensor etc. to be employed for the phase estimation.

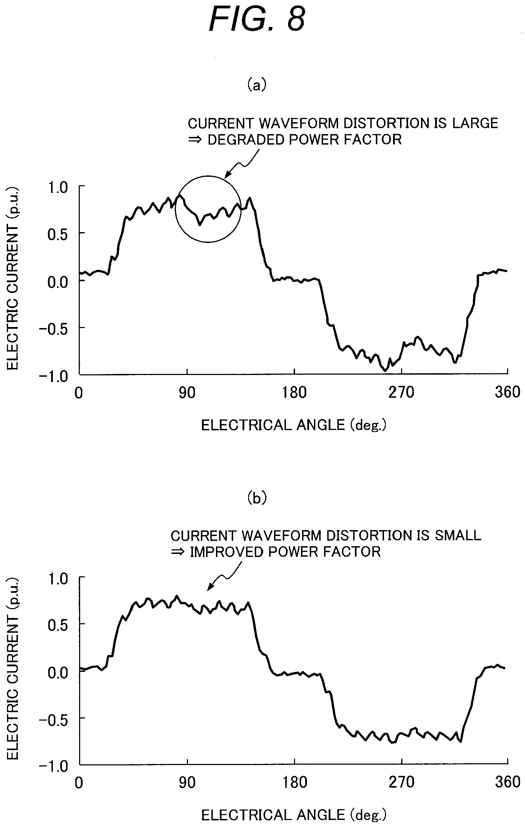

FIG. 8 illustrates a comparative example of the measurement result of the waveform of current flowing through the synchronous motor. FIG. 8 (a) illustrates the phase current waveform in the case where Patent Literature 1 is employed, and FIG. 8 (b) illustrates the phase current waveform in the case where the present invention is employed. In FIG. 8, the vertical axis is normalized to 1.0 p.u. for the root mean square value of the electric current when the synchronous motor is tested according to Patent Literature 1.

As shown in FIG. 8, in the case where the present example is employed, it has been able to confirm by the actual measurement that it is possible to reduce the distortion factor of the current waveform of the synchronous motor and to improve the power factor in the 120-degree energization.

As explained above, when the present example is applied to various synchronous motors, it is possible to perform a torque shock reduced seamless drive in the broad velocity range from a zero velocity to the middle and high velocity region, and it is also possible to provide the control system for the synchronous motor which can achieve the highly efficient control characteristic.

Example 2

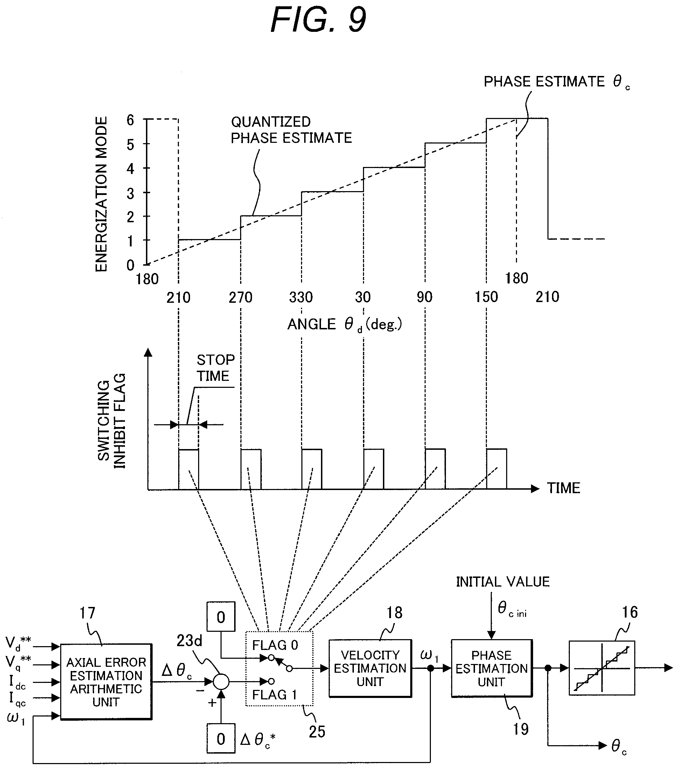

FIG. 9 is a block diagram illustrating a configuration of a phase/velocity estimation arithmetic unit as a principal part of a control system for a synchronous motor according to another example of the present invention. In FIG. 9, the same symbol is attached to the same element as in FIG. 1.

In the 120-degree energization, an overlapping period of an energized phase occurs immediately after switching the energization mode, and it is likely that an error may be included in the phase estimation result during this period. Therefore, it is preferable to forbid the phase estimation for a prescribed period, for example a prescribed time, immediately after the energization mode is switched.

In FIG. 9, an output from the axial error estimation arithmetic unit 17 is sent to the adder 23d. A mask setting unit 25 is provided between the adder 23d and the velocity estimation unit 18. This mask setting unit 25 has a selection function by means of a switch, and selects the output of the adder 23d or the "zero" output, according to Flag 1 or Flag 0.

Therefore, Flag 0 is selected for a prescribed stop time immediately after the energization mode is switched, and the "zero" output is outputted and the phase estimation is forbidden for the prescribed stop time. On the other hand, when the prescribed stop time passes, Flag 0 is switched to Flag 1, then the output from the adder 23d is selected and the phase estimation is performed.

In the present example, the prescribed period is defined as the passage of time, however, the same effect is obtained even if the "zero" output is set up over a prescribed angle.

Also in the control system for the synchronous motor configured in this way, it is needless to say that the distortion factor of the current waveform of the synchronous motor is reduced and the power factor in the 120-degree energization can be improved (not shown). Therefore, even when configured in this way, the same effect as in FIG. 1 can be obtained.

Example 3

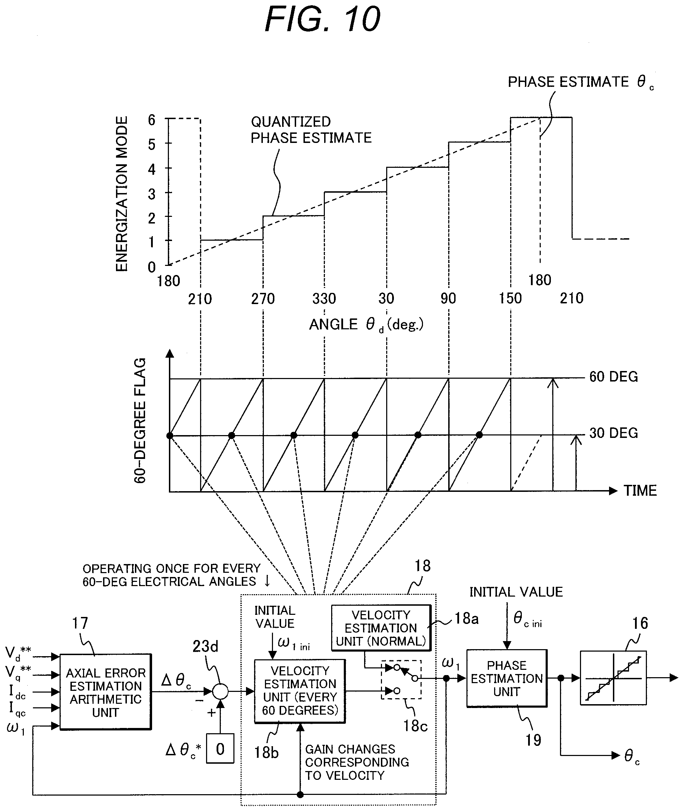

FIG. 10 is a block diagram illustrating a configuration of a phase/velocity estimation arithmetic unit as a principal part of a control system for a synchronous motor according to yet another example of the present invention. In FIG. 10, the same symbol is attached to the same element as in FIG. 1.

As described in Example 2, in the 120-degree energization, an overlapping period of an energized phase occurs immediately after switching the energization mode, and it is likely that an error may be included in the phase estimation result during this period. Therefore, it is important to suppress this error.

For this purpose, as is the case with Example 2, utilizing the fact that the voltage phase in the 120-degree energization is updated every 60 degrees, the velocity estimation unit 18 is provided with a velocity estimation unit (normal) 18a which outputs the normal continuous estimated velocity signal; a velocity estimation unit (every 60 degrees) 18b which outputs an estimated velocity signal every 60 degrees; and a mode switch 18c which selects one of the velocity estimation unit (normal) 18a and the velocity estimation unit (every 60 degrees) 18b. Flags are set up such that with Flag 0, the velocity estimation unit (normal) 18a is selected, and with Flag 1, the velocity estimation unit (every 60 degrees) 18b which outputs the estimated velocity signal every 60 degrees is selected.

Therefore, in the third region (the rotational velocity range between V1 and the maximum velocity), the velocity estimate signal of the velocity estimation unit (normally) 18a is selected, and in the second region (the rotational velocity range between V1 and V2), the velocity estimate signal of the velocity estimation unit (every 60 degrees) 18b is selected.

In the third region (the rotational velocity range between V1 and the maximum velocity), the phase estimation unit 19 performs phase estimation of the velocity estimate signal of the velocity estimation unit (normal) 18a and generates a phase estimate $\theta c$, and it is employed in the 180-degree energization method. In the second region (the rotational velocity range between V1 and V2), the phase estimation unit 19 performs the phase estimation of the velocity estimate signal of the velocity estimation unit (every 60 degrees) 18b, and the phase quantizer 16 generates subsequently a mode switching signal, which is then employed in the 120-degree energization method.

However, within the mode determined by the flag, the velocity estimation unit 18 is operated once, and the operation timing can be set up arbitrarily.

Here, the voltage phase is updated once every 60 degrees in the 120-degree energization; accordingly, it acts as a dead time element when seen from the standpoint of the control system. Therefore, it becomes necessary to make variable the control gain of the velocity estimation unit (every 60 degrees) 18b corresponding to the rotational velocity of the synchronous motor. It is preferable to set the control gain for this purpose such that when the rotational velocity is low, the control gain is small, and when the rotational velocity is high, the control gain is large. The control gain may be changed step-wise or may be changed continuously, with respect to the rotational velocity.

Also in the control system for the synchronous motor configured in this way, it is needless to say that the distortion factor of the current waveform of the synchronous motor is reduced and the power factor in the 120-degree energization can be improved (not shown). Therefore, even when configured in this way, the same effect as in FIG. 1 can be obtained.

Example 4

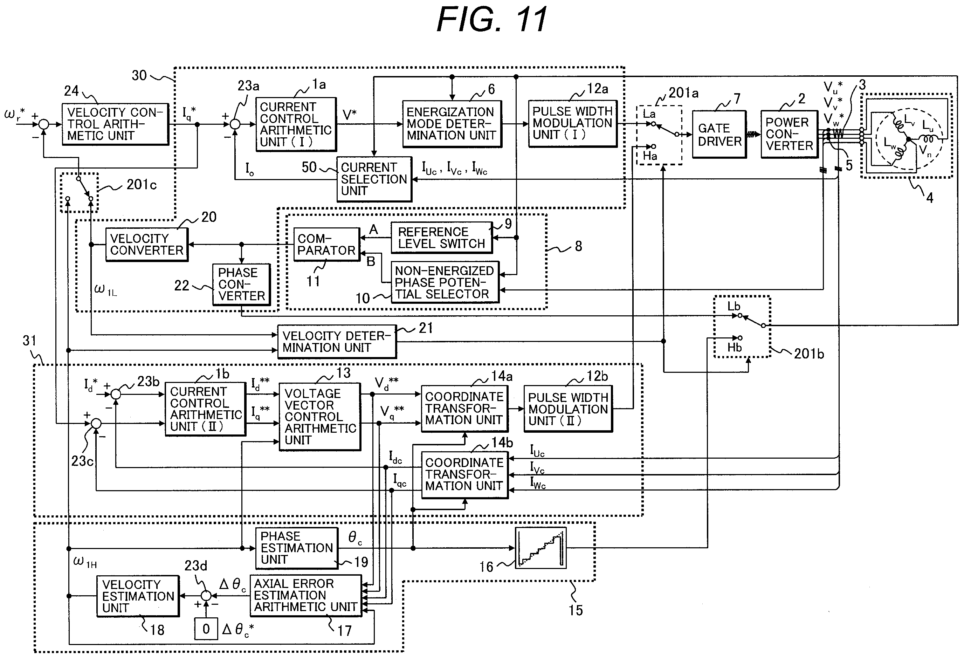

FIG. 11 is a block diagram illustrating a configuration of a control system of a synchronous motor according to the yet another example of the present invention. In FIG. 11, the same symbol is attached to the same element as in FIG. 1.

FIG. 11 is different from FIG. 1 in that the control system for the synchronous motor is provided with a velocity control arithmetic unit 24 which controls the synchronous motor with a velocity command value $\omega r^*$ as a target value. Then, the velocity command value $\omega r^*$ is selectively given to the velocity converter 20 of the 120-degree energization method section 30 and the velocity determination unit 21, or to the adder 23c of the 180-degree energization method section 31, by means of a switch 201c.

The function and operation of the constituent features except for the above are nearly the same as those of the example illustrated in FIG. 1. Also as for the effect, it is possible to expect the same effect as in the example illustrated in FIG. 1.

Also in the control system for the synchronous motor configured in this way, it is needless to say that the distortion factor of the current waveform of the synchronous motor is reduced and the power factor in the 120-degree energization can be improved (not shown). Therefore, even when configured in this way, the same effect as in FIG. 1 can be obtained.

Reference Signs List

| | |
|---|---|
| 1a -- | Current control arithmetic unit (I) |
| 1b -- | Current control arithmetic unit (II) |
| 2 -- | Power converter (inverter) |
| 3 -- | Current detector |
| 4 -- | Synchronous motor |
| 5 -- | Voltage detector |
| 6 -- | Energization mode determination unit |
| 7 -- | Gate driver |
| 8 -- | Mode switching trigger generator |
| 9 -- | Reference level switch |
| 10 -- | Non-energized phase potential selector |
| 11 -- | Comparator |
| 12a -- | Pulse width modulation unit (I) |
| 12b -- | Pulse width modulation unit (II) |
| 13 -- | Voltage vector control arithmetic unit |
| 14a, 14b -- | Coordinate transformation unit |
| 15 -- | Phase/velocity estimation arithmetic unit |
| 16 -- | Phase quantizer |
| 17 -- | Axial error estimation arithmetic unit |
| 18 -- | Velocity estimation unit |
| 18a -- | Velocity estimation unit (normal) |
| 18b -- | Velocity estimation unit (every 60 degrees) |
| 19 -- | Phase estimation unit |
| 20 -- | Velocity conversion unit |
| 21 -- | Velocity determination unit |
| 22 -- | Phase converter |
| 23a, 23b, 23c -- | Adder |
| 24 -- | Velocity control arithmetic unit |
| 30 -- | 120-degree energization method section |
| 31 -- | 180-degree energization method section |
| 50 -- | Current selection unit |
| 201a, 201b, 201c, 113 -- | Switch |
| 111, 112 -- | Reference level setting unit |

Claims

1. A control system for a synchronous motor (4) comprising:

a synchronous motor (4);
a power converter (2) coupled to the synchronous motor (4) and configured with a plurality of switching elements; and
a controller operable to output a voltage command to the power converter (2) to control the synchronous motor (4), wherein the control system further comprises
a first phase estimation means operable to select two energized phases among three phase windings of the synchronous motor (4), operable to apply a pulse voltage, and operable to estimate phase and velocity on the basis of a non-energized phase electromotive force at the time of application of the pulse voltage;

a second phase estimation means operable to estimate phase and velocity on the basis of a velocity-induced electromotive force of the synchronous motor (4);

a first driving means (30) operable to drive the synchronous motor (4) by 120-degree energization;

a second driving means (31) operable to drive the synchronous motor (4) by 180-degree energization;

a first selecting means (201b) operable to select one of the first phase estimation means and the second phase estimation means; and

a second selecting means (201a) operable to select one of the first driving means and the second driving means, **characterised by**

wherein, when the rotational velocity of the synchronous motor (4) is not less than a prescribed value V1 set up in advance, the first selecting means (201b) selects the second phase estimation means and the second selecting means (201a) selects the second driving means,

wherein, when the rotational velocity of the synchronous motor (4) is not greater than the prescribed value V1 set up in advance and not less than a prescribed value V2 lower than the prescribed value V1, the first selecting means (201b) selects the second phase estimation means and the second selecting means (201a) selects the first driving means, and

wherein, when the rotational velocity of the synchronous motor (4) is not greater than the prescribed value V2, the first selecting means (201b) selects the first phase estimation means and the second selecting means (201a) selects the first driving means.

2. The control system for the synchronous motor (4) according to Claim 1,
wherein as the first phase estimation means for estimating phase and velocity on the basis of the non-energized phase electromotive force, the control system further comprises
a controller operable to select two energized phases among the three phase windings of the synchronous motor (4) and to perform energization control of the power converter (2) by a pulse width modulation operation with six kinds of energization modes, and
wherein the controller comprises:

a potential difference means operable to detect a potential difference between a terminal potential of the non-energized phase and a connection node potential of a stator winding of the synchronous motor (4);

a sampling means operable to sample the detection value in synchronization with an energization period of the energized phase;

a comparison means (11) operable to compare a level of the sampling value with a reference voltage; and

an energization mode switching means operable to switch the energization mode sequentially corresponding to the result of the comparison.

3. The control system for the synchronous motor according to Claim 1,
wherein as the second phase estimation means for estimating phase and velocity on the basis of the velocity-induced electromotive force, the control system further comprises:

a voltage vector arithmetic unit (13) operable to perform vector control of the synchronous motor (4) via the power converter;

an axial error estimation arithmetic unit (17) operable to estimate an axial error which is a deviation of a value of a phase estimation unit obtained by integrating an estimate of the velocity and a value of a magnetic flux axis of the synchronous motor (4); and

a velocity estimation unit (18)_operable to control the velocity so as to make the estimate of the axial error coincide with a command value of the axial error.

4. The control system for the synchronous motor (4) according to Claim 1,
wherein the synchronous motor (4) is controlled with a velocity command value as a target value.

**Patentansprüche**

1. Steuersystem für einen Synchronmotor (4), umfassend:

einen Synchronmotor (4);
einen Leistungswandler (2), der mit dem Synchronmotor (4) verbunden ist und mit einer Vielzahl von Schaltelementen konfiguriert ist; und

eine Steuervorrichtung, die betreibbar ist, um einen Spannungsbefehl an den Leistungswandler (2) abzugeben, um den Synchronmotor (4) zu steuern,
wobei das Steuersystem ferner Folgendes umfasst:

ein erstes Phasenschätzmittel, das betreibbar ist, um zwei erregte Phasen aus drei Phasenwicklungen des Synchronmotors (4) auszuwählen, das betreibbar ist, um eine Impulsspannung anzulegen und das betreibbar ist, um Phase und Geschwindigkeit auf der Basis einer nicht-erregten elektromotorischen Kraft einer Phase zum Zeitpunkt des Anlegens der Impulsspannung zu schätzen;
ein zweites Phasenschätzmittel, das betreibbar ist, um Phase und Geschwindigkeit auf der Basis einer geschwindigkeitsinduzierten elektromotorischen Kraft des Synchronmotors (4) zu schätzen;
ein erstes Antriebsmittel (30), das betreibbar ist, um den Synchronmotor (4) durch 120-Grad-Erregung anzutreiben;
ein zweites Antriebsmittel (31), das betreibbar ist, um den Synchronmotor (4) durch 180-Grad-Erregung anzutreiben;
ein erstes Auswahlmittel (201b), das betreibbar ist, um entweder das erste Phasenschätzmittel oder das zweite Phasenschätzmittel auszuwählen; und
ein zweites Auswahlmittel (201a), das betreibbar ist, um entweder das erste Antriebsmittel oder das zweite Antriebsmittel auszuwählen,
**dadurch gekennzeichnet, dass**
wenn die Drehgeschwindigkeit des Synchronmotors (4) nicht geringer als der vorab eingestellte, vorgeschriebene Wert V1 ist, das erste Auswahlmittel (201b) das zweite Phasenschätzmittel auswählt und das zweite Auswahlmittel (201a) das zweite Antriebsmittel auswählt,
wenn die Drehgeschwindigkeit des Synchronmotors (4) nicht größer als der vorab eingestellte, vorgeschriebene Wert V1 und nicht geringer als der vorgeschriebene Wert V2, der niedriger als der vorgeschriebene Wert V1 ist, das erste Auswahlmittel (201b) das zweite Phasenschätzmittel auswählt und das zweite Auswahlmittel (201a) das erste Antriebsmittel auswählt, und
wenn die Drehgeschwindigkeit des Synchronmotors (4) nicht größer als der vorgeschriebene Wert V2 ist, das erste Auswahlmittel (201b) das erste Phasenschätzmittel auswählt und das zweite Auswahlmittel (201a) das erste Antriebsmittel auswählt.

2. Steuersystem für den Synchronmotor (4) nach Anspruch 1,
wobei das Steuersystem als das erste Phasenschätzmittel für das Schätzen von Phase und Geschwindigkeit auf der Basis der nicht-erregten elektromotorischen Phasenkraft ferner Folgendes umfasst:

eine Steuervorrichtung, die betreibbar ist, um zwei erregte Phasen aus den drei Phasenwicklungen des Synchronmotors (4) auszuwählen und die Steuerung der Erregung des Leistungswandlers (2) durch einen Impulsweitenmodulationsbetrieb mit sechs Arten von Erregungsmodi durchzuführen, und
wobei die Steuervorrichtung Folgendes umfasst:

ein Potentialdifferenzmittel, das betreibbar ist, um eine Potentialdifferenz zwischen einem Klemmenpotential der nicht-erregten Phase und einem Verbindungsknotenpotential einer Statorwicklung des Synchronmotors (4) zu detektieren;
ein Abtastmittel, das betreibbar ist, um den Detektionswert in Synchronisation mit einer Erregungsperiode der erregten Phase abzutasten;
ein Vergleichsmittel (11), das betreibbar ist, um eine Höhe des Abtastwertes mit einer Referenzspannung zu vergleichen; und
ein Erregungsmodus-Schaltmittel, das betreibbar ist, um den Erregungsmodus entsprechend dem Ergebnis des Vergleichs sequentiell umzuschalten.

3. Steuersystem für den Synchronmotor nach Anspruch 1,
wobei das Steuersystem als das zweite Phasenschätzmittel für das Schätzen von Phase und Geschwindigkeit auf der Basis der geschwindigkeitsinduzierten elektromotorischen Kraft ferner Folgendes umfasst:

eine Spannungsvektor-Arithmetikeinheit (13), die betreibbar ist, um eine Vektorsteuerung des Synchronmotors (4) über den Leistungswandler durchzuführen;
eine Axialfehlerschätzungs-Arithmetikeinheit (17), die betreibbar ist, um einen Axialfehler zu schätzen, der eine Abweichung eines Wertes einer Phasenschätzungseinheit ist, die durch Integration einer Schätzung der Geschwindigkeit und eines Wertes einer Magnetflussachse des Synchronmotors (4) erhalten wird; und

eine Geschwindigkeitsschätzungseinheit (18), die betreibbar ist, um die Geschwindigkeit so zu steuern, dass die Schätzung des Axialfehlers mit einem Sollwert des Axialfehlers übereinstimmt.

4. Steuersystem für den Synchronmotor (4) nach Anspruch 1, wobei der Synchronmotor (4) mit einem Geschwindigkeitssollwert als Zielwert gesteuert wird.

**Revendications**

1. Système de commande pour un moteur synchrone (4) comprenant :

un moteur synchrone (4) ;

un convertisseur de puissance (2) couplé au moteur synchrone (4) et configuré avec une pluralité d'éléments de commutation ; et

un dispositif de commande opérationnel pour délivrer en sortie une instruction de tension au convertisseur de puissance (2) afin de commander le moteur synchrone (4),

dans lequel le système de commande comprend en outre

des premiers moyens d'estimation de phase opérationnels pour sélectionner deux phases excitées parmi des enroulements triphasés du moteur synchrone (4), opérationnels pour appliquer une tension d'impulsion, et opérationnels pour estimer une phase et une vitesse sur la base d'une force électromotrice de phase non excitée au moment de l'application de la tension d'impulsion ;

des seconds moyens d'estimation de phase opérationnels pour estimer une phase et une vitesse sur la base d'une force électromotrice induite par la vitesse du moteur synchrone (4) ;

des premiers moyens d'entraînement (30) opérationnels pour entraîner le moteur synchrone (4) par une excitation à 120 degrés ;

des seconds moyens d'entraînement (31) opérationnels pour entraîner le moteur synchrone (4) par une excitation à 180 degrés ;

des premiers moyens de sélection (201b) opérationnels pour sélectionner certains des premiers moyens d'estimation de phase et des seconds moyens d'estimation de phase ; et

des seconds moyens de sélection (201a) opérationnels pour sélectionner certains des premiers moyens d'entraînement et des seconds moyens d'entraînement,

**caractérisé par**

dans lequel, lorsque la vitesse de rotation du moteur synchrone (4) n'est pas inférieure à une valeur prescrite V1 établie à l'avance, les premiers moyens de sélection (201b) sélectionnent les seconds moyens d'estimation de phase et les seconds moyens de sélection (201a) sélectionnent les seconds moyens d'entraînement,

dans lequel, lorsque la vitesse de rotation du moteur synchrone (4) n'est pas supérieure à la valeur prescrite V1 établie à l'avance et pas inférieure à une valeur prescrite V2 inférieure à la valeur prescrite V1, les premiers moyens de sélection (201b) sélectionnent les seconds moyens d'estimation de phase et les seconds moyens de sélection (201a) sélectionnent les premiers moyens d'entraînement, et

dans lequel, lorsque la vitesse de rotation du moteur synchrone (4) n'est pas supérieure à la valeur prescrite V2, les premiers moyens de sélection (201b) sélectionnent les premiers moyens d'estimation de phase et les seconds moyens de sélection (201a) sélectionnent les premiers moyens d'entraînement.

2. Système de commande pour le moteur synchrone (4) selon la revendication 1, dans lequel en tant que premiers moyens d'estimation de phase pour estimer une phase et une vitesse sur la base de la force électromotrice de phase non excitée, le système de commande comprend en outre un dispositif opérationnel pour sélectionner deux phases excitées parmi les enroulements triphasés du moteur synchrone (4) et pour effectuer une commande d'excitation du convertisseur de puissance (2) par une opération de modulation de largeur d'impulsion avec six types de modes d'excitation, et dans lequel le dispositif de commande comprend :

des moyens de différence de potentiel opérationnels pour détecter une différence de potentiel entre un potentiel terminal de la phase non excitée et un potentiel de nœud de connexion d'un enroulement de stator du moteur synchrone (4) ;

des moyens d'échantillonnage opérationnels pour échantillonner la valeur de détection en synchronisation avec une période d'excitation de la phase excitée ;

des moyens de comparaison (11) opérationnels pour comparer un niveau de la valeur d'échantillonnage avec une tension de référence ; et

des moyens de commutation de mode d'excitation opérationnels pour commuter le mode d'excitation correspondant séquentiellement au résultat de la comparaison.

3.  Système de commande pour le moteur synchrone selon la revendication 1,
    dans lequel en tant que seconds moyens d'estimation de phase pour estimer une phase et une vitesse sur la base de la force électromotrice induite par la vitesse, le système de commande comprend en outre :

    une unité arithmétique de vecteur de tension (13) opérationnelle pour effectuer une commande vectorielle du moteur synchrone (4) via le convertisseur de puissance ;
    une unité arithmétique d'estimation d'erreur axiale (17) opérationnelle pour estimer une erreur axiale qui est un écart entre une valeur d'une unité d'estimation de phase obtenue en intégrant une estimation de la vitesse et une valeur d'un axe de flux magnétique du moteur synchrone (4) ; et
    une unité d'estimation de vitesse (18) opérationnelle pour commander la vitesse de façon à faire coïncider l'estimation de l'erreur axiale avec une valeur d'instruction de l'erreur axiale.

4.  Système de commande pour le moteur synchrone (4) selon la revendication 1,
    dans lequel le moteur synchrone (4) est commandé avec une valeur d'instruction de vitesse en tant que valeur cible.

# FIG. 1

EP 2 755 319 B1

# FIG. 2

(a) POSITIVE PULSE

$+V_h$ ↑⊓

V PHASE    PM MOTOR

$-V_h$ ↓⊓⊓   W PHASE

$V_v = E_v$

(b) NEGATIVE PULSE

$+V_h$ ↓⊓⊓

V PHASE    PM MOTOR

$-V_h$ ↑⊓   W PHASE

$V_v = E_v$

# FIG. 3

(2) NON-ENERGIZED PHASE EMF
WHEN NEGATIVE PULSE APPLIED

(1) NON-ENERGIZED PHASE EMF
WHEN POSITIVE PULSE APPLIED

$\Phi_u$

PULSE-INDUCED VOLTAGE

+

0

−

VELOCITY-INDUCED
EMF $E_{mu}$

−180  −120  −60  0  60  120  180

ANGLE $\theta_d$ (deg.) ⟶

# FIG. 4

(1) V-W PULSE INDUCED EMF

(2) W-V PULSE INDUCED EMF

(2) U-W PULSE INDUCED EMF

(1) W-U PULSE INDUCED EMF

(1) U-V PULSE INDUCED EMF

(2) V-U PULSE INDUCED EMF

$E_{ou}$

$G_{up}$

$G_{un}$

$E_{ov}$

$G_{vp}$

$G_{vn}$

$E_{ow}$

$G_{wp}$

$G_{wn}$

| $\theta_d$(deg.) | -150 | -90 | -30 | 30 | 90 | 150 | 210 |
|---|---|---|---|---|---|---|---|

| ENERGIZATION MODE | 1 | 2 | 3 | 4 | 5 | 6 |
|---|---|---|---|---|---|---|
| +side | U+ | | V+ | | W+ | |
| −side | V− | W− | | U− | | V− |
| NON-ENERGIZED PHASE | W | V | U | W | V | U |

# FIG. 5

$V_{hp}$: POSITIVE-SIDE REFERENCE VOLTAGE

$V_{hn}$: NEGATIVE-SIDE REFERENCE VOLTAGE

NON-ENERGIZED PHASE VOLTAGE B AND REFERENCE VOLTAGE A

MODE SWITCHING TRIGGER

| NON-ENERGIZED PHASE | U | W | V | U | W | V | U |
|---|---|---|---|---|---|---|---|
| ENERGIZATION MODE | 6 | 1 | 2 | 3 | 4 | 5 | 6 |

150    210    270    330    30    90    150    210

ANGLE $\theta_d$ (deg.) ⟶

# FIG. 6

111
$V_{hp}$  MODE 2,4,6

113

2

REFERENCE LEVEL

112
$V_{hn}$  MODE 1,3,5

1

9

ENERGIZATION MODE COMMAND

FIG. 7

# FIG. 8

(a)

CURRENT WAVEFORM DISTORTION IS LARGE
⇒ DEGRADED POWER FACTOR

(b)

CURRENT WAVEFORM DISTORTION IS SMALL
⇒ IMPROVED POWER FACTOR

# FIG. 9

# FIG. 10

PHASE ESTIMATE $\theta_c$

QUANTIZED
PHASE ESTIMATE

ENERGIZATION MODE

ANGLE $\theta_d$ (deg.)

60-DEGREE FLAG

60 DEG

30 DEG

TIME

OPERATING ONCE FOR EVERY
60-DEG ELECTRICAL ANGLES ↓

INITIAL VALUE

18

VELOCITY
ESTIMATION
UNIT (NORMAL)

18a

INITIAL VALUE

$\theta_{c\,ini}$

16

$V_d^{**}$
$V_q^{**}$
$I_{dc}$
$I_{qc}$
$\omega_1$

AXIAL ERROR
ESTIMATION
ARITHMETIC
UNIT

17

$\Delta\theta_c$

23d

INITIAL
VALUE

$\omega_{1\,ini}$

VELOCITY
ESTIMATION
UNIT (EVERY
60 DEGREES)

18c

$\omega_1$

PHASE
ESTIMATION
UNIT

19

$\theta_c$

$\Delta\theta_c^*$  0

18b

GAIN CHANGES
CORRESPONDING
TO VELOCITY

## FIG. 11

EP 2 755 319 B1

# FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6400107 B
- JP 2009189176 A
- JP 2004048886 A
- JP 2003111469 A
- JP 2006020411 A